# EUROPÄISCHE PATENTSCHRIFT

(11) **EP 0 630 387 B1**
(45) Veröffentlichungstag und Bekanntmachung des Hinweises auf die Patenterteilung: **20.11.1996**
(21) Anmeldenummer: 93906479.6
(22) Anmeldetag: 03.03.1993
(51) Int. Cl.: C08F 220/04, C08F 226/10

(54) **VERFAHREN ZUR HERSTELLUNG VON COPOLYMERISATEN AUS SÄUREGRUPPEN ENTHALTENDEN MONOETHYLENISCH UNGESÄTTIGTEN MONOMEREN UND N-VINYLLACTAMEN**
PROCESS FOR PRODUCING COPOLYMERS FROM MONOETHYLENICALLY UNSATURATED MONOMERS CONTAINING ACID GROUPS AND FROM N-VINYL LACTAMES
PROCEDE DE FABRICATION DE COPOLYMERISATS A PARTIR DE MONOMERES NON SATURES MONOETHYLENIQUEMENT CONTENANT DES GROUPES ACIDES ET DE LACTAMES N-VINYLIQUES

(30) Priorität: 12.03.1992 DE 4207900
(43) Veröffentlichungstag der Anmeldung: 28.12.1994
(73) Patentinhaber: BASF Aktiengesellschaft, 67063 Ludwigshafen (DE)
(72) Erfinder: MEYER, Harald, D-6705 Deidesheim (DE); DENZINGER, Walter, D-6720 Speyer (DE); SANNER, Axel, D-6710 Frankenthal (DE); HARTMANN, Heinrich, D-6703 Limburgerhof (DE)
(86) Internationale Anmeldenummer: EP9300478
(87) Internationale Veröffentlichungsnummer: WO9318073

(56) Entgegenhaltungen:
- EP-A- 0 215 379
- GB-A- 1 333 275
- US-A- 3 277 066

## Beschreibung

Die Erfindung betrifft ein Verfahren zur Herstellung von Copolymerisaten aus
(a) Säuregruppen enthaltenden monoethylenisch ungesättigten Monomeren,
(b) N-Vinyllactamen und gegebenenfalls
(c) anderen monoethylenisch ungesättigten Monomeren
durch Copolymerisieren der Monomeren in Gegenwart von Radikale bildenden Polymerisationsinitiatoren.

Aus der US-A-2 676 949 sind Copolymerisate aus Maleinsäureanhydrid und N-Vinyllactamen bekannt, die mit Hilfe einer Fällungspolymerisation in Gegenwart von Radikale bildenden Verbindungen im Benzol hergestellt werden. Terpolymerisate aus N-Vinylpyrrolidon, C₁-C₁₀-Acrylaten und Acrylsäure bzw. Methacrylsäure sind aus der US-A-3 405 084 bekannt. Die Polymerisation wird in wasserfreiem Ethanol durchgeführt. Die so erhaltene Polymerlösung wird mit organischen Aminen neutralisiert und als Additiv für Haarsprayformulierungen verwendet.

Aus der US-A-4 424 079 ist bekannt, Copolymerisate aus Maleinsäureanhydrid und N-Vinylpyrrolidon, die durch Fällungspolymerisation in Methylenchlorid oder Toluol hergestellt werden, als Rostentferner zu verwenden. Gemäß der Lehre der EP-A-0 205 451 erhält man Copolymerisate aus N-Vinylpyrrolidon und Maleinsäureanhydrid durch Polymerisieren nach Art einer Fällungspolymerisation in einem organischen Lösemittel, in dem die Monomeren zwar löslich, jedoch das entstehende Copolymerisat unlöslich ist.

Aus der US-A-4 709 759 ist die Herstellung eines Copolymerisats aus Acrylamid, N-Vinylpyrrolidon, N-n-Octylacrylamid in Wasser durch Emulsionspolymerisation bekannt. Der Acrylamidanteil der Copolymerisate wird unter Bildung von Acrylsäure-Einheiten hydrolysiert. Diese Polymerisate werden zur Rückgewinnung von Erdöl aus ölhaltigem Wasser benutzt.

Aus der US-A-4 711 726 sind Copolymerisate aus (Meth)acrylsäure und Vinylpyrrolidon bekannt. Diese Copolymerisate werden als Inkrustations- und Rostinhibitor in Dampfkesseln eingesetzt. Die US-A-4 595 737 betrifft ein Verfahren zur Herstellung von wasserlöslichen Terpolymeren aus N-Vinyllactamen, Acrylsäure oder deren Salzen und C₁-C₄-Alkylvinylethern. Die Copolymerisation wird in inerten organischen Lösemitteln durchgeführt. In der US-A-5 011 895, der WO-A-90/12041 und der WO-A-91/00302 werden Fällungspolymerisationen von N-Vinyllactamen, Acrylsäure und gegebenenfalls weiteren Monomeren in gesättigten C₃-C₁₀-aliphatischen Kohlenwasserstoffen beschrieben. Gemäß den Angaben in Journ. of Polymer Sci., Band 23, S. 377-379 (1958) kann man Acrylsäure und Vinylpyrrolidon nicht nur in Propanol, Benzol, Toluol, Xylol, Dioxan, Chloroform, Tetrachlorkohlenstoff und Petrolether, sondern mit besonders gutem Ergebnis auch in Tetrahydrofuran polymerisieren.

Aus der DE-B-922 378 ist ein Verfahren zur Herstellung von Polymerisationsprodukten aus N-Vinyllactamen bekannt, bei dem man die Polymerisation von N-Vinyllactamen gegebenenfalls zusammen mit anderen monoethylenisch ungesättigten Monomeren in wäßriger Lösung in Gegenwart von Wasserstoffperoxid durchführt und während der Polymerisation Ammoniak, wasserlösliche Amine oder Salze dieser Stoffe zusetzt. Die Verwendung von Natriumhydroxid oder Natriumbicarbonat anstelle von Ammoniak oder Aminen bei der Copolymerisation führt zu einer starken Verzögerung des Anspringens der Polymerisation.

Aus der EP-B-215 379 ist ein Verfahren zur Herstellung von Polyvinylpyrrolidon bekannt, bei dem man die Polymerisation von Vinylpyrrolidon in wäßriger Lösung bei pH-Werten zwischen 7 und 11 in Gegenwart von Schwermetallionen bzw. einer Mischung eines Schwermetallsalzes und eines Schwermetallkomplexbildners durchführt. Zur Einstellung des pH-Werts werden Natronlauge, Kalilauge sowie deren Carbonate oder Hydrogencarbonate verwendet.

Der vorliegenden Erfindung liegt die Aufgabe zugrunde, ein einfacheres Verfahren zur Herstellung von Copolymerisaten aus Säuregruppen enthaltenden Monomeren und N-Vinyllactamen zur Verfügung zu stellen.

Die Aufgabe wird erfindungsgemäß gelöst durch ein Verfahren zur Herstellung von Copolymerisaten aus
(a) Säuregruppen enthaltenden monoethylenisch ungesättigten Monomeren,
(b) N-Vinyllactamen und gegebenenfalls
(c) anderen monoethylenisch ungesättigten Monomeren
durch Copolymerisieren der Monomeren in Gegenwart von Radikale bildenden Polymerisationsinitiatoren, wenn man die Copolymerisation nach Art einer Lösungspolymerisation in Wasser bei einem pH-Wert von mindestens 6 durchführt und zur Einstellung des pH-Wertes der wäßrigen Monomerlösung eine Alkalimetall- oder Erdalkalimetallbase oder eine Mischung davon einsetzt, wobei die radikalbildenden Initiatoren bei der gewählten Reaktionstemperatur eine Halbwertszeit von weniger als 3 Stunden aufweisen. Die Monomerenmenge, die bei der Copolymerisation eingesetzt wird, beträgt für die Monomeren
(a) 5 bis 95 Gew.-%,
(b) 95 bis 5 Gew.-% und
(c) 0 bis 30 Gew.-%.

Die so erhältlichen wäßrigen Polymerlösungen können beispielsweise als Additiv für Haarsprays, als Schmiermitteladditiv, als Strukturverbesserer von Ackerböden, als Rostverhinderer bzw. Rostentferner von metallischen Oberflächen, als Kesselsteinverhinderer bzw. Kesselsteinentferner, als Mittel zur Erdölwiedergewinnung aus ölhaltigem Wasser, Wirkstofffreisetzer, als Reinigungsmittel von Abwässern, als Klebstoffrohstoff, als Waschmitteladditiv sowie als Hilfsmittel in der Photoindustrie und in kosmetischen Zubereitungen verwendet werden.

Es war nicht vorhersehbar, daß Salze monoethylenisch ungesättigter Carbonsäuren mit N-Vinyllactamen in wäßrigen Systemen copolymerisierbar sind, weil nämlich bekannt ist, daß N-Vinyllactame wie N-Vinylpyrrolidon, in wäßrigen Lösungen unter Einfluß schwacher Säuren nicht stabil sind, vgl. J. Ferguson, V.S. Rajan, Eur. Polym. Journ., Band 15, 627 (1979) und Kühn und Birett, Merkblätter gefährlicher Arbeitsstoffe V10, V12.

Geeignete Monomere der Gruppe (a) sind monoethylenisch ungesättigte Verbindungen, die mindestens eine Säuregruppe enthalten, z.B. eine Carboxylgruppe oder eine Sulfonsäuregruppe. Verbindungen dieser Art sind beispielsweise Acrylsäure, Methacrylsäure, Dimethacrylsäure, Ethylacrylsäure, Crotonsäure, Allylessigsäure und Vinylessigsäure. Außerdem eignen sich monoethylenisch ungesättigte Dicarbonsäuren, wie Maleinsäure, Fumarsäure, Itaconsäure, Mesaconsäure, Methylenmalonsäure, Zitraconsäure, Maleinsäureanhydrid, Itaconsäureanhydrid und Methylenmalonsäureanhydrid, wobei die Anhydride beim Eintragen in Wasser zu den entsprechenden Dicarbonsäuren hydrolysieren. Als Monomere der Gruppe (a) eignen sich außerdem Sulfonsäuregruppen enthaltende Monomere, wie 2-Acrylamido-2-methylpropansulfonsäure, Vinylsulfonsäure, Methallylsulfonsäure oder Allylsulfonsäure und/oder Phosphonsäuregruppen aufweisende Monomere, wie Vinylphosphonsäure. Die Monomeren der Gruppe (a) können entweder allein oder in Mischung miteinander eingesetzt werden. Diese Monomeren können entweder in Form der freien Säuren in die Polymerisationszone gegeben werden oder vorzugsweise in Form von wäßrigen Lösungen ihrer Alkali- oder Erdalkalimetallsalze. Besonders bevorzugt werden aus dieser Gruppe von Monomeren Acrylsäure, Methacrylsäure, Maleinsäure, Itaconsäure und Fumarsäure eingesetzt, wobei die Verwendung der entsprechenden Lithium-, Natrium-, Kalium-, Magnesium-, Calcium- oder Strontiumsalze als Monomer der Gruppe (a) besonders bevorzugt ist. Die Salze der monoethylenisch ungesättigten Säuregruppen enthaltenden Monomeren werden durch Zugabe von Alkali- oder Erdalkalihydroxiden, Alkali- und Erdalkalicarbonaten oder Bicarbonaten zu wäßrigen Lösungen der freien Säuren hergestellt.

Geeignete Monomere der Gruppe (b) sind insbesondere N-Vinylpyrrolidon, N-Vinylpiperidon und N-Vinylcaprolactam.

Die Monomeren der Gruppe (b) können entweder allein oder in Mischung bei der Copolymerisation eingesetzt werden.

Monomere der Gruppe (c), die gegebenenfalls bei der Copolymerisation der Monomeren (a) und (b) mitverwendet werden, sind beispielsweise alle anderen Monomeren, die mit monoethylenisch ungesättigten Carbonsäuren und N-Vinyllactamen copolymerisierbar sind, wie Methylacrylat, Methylmethacrylat, Ethylacrylat, Malein> säurediethylester, N-Vinylimidazol, Dimethylaminoethylacrylat, Dimethylaminoethylmethacrylat, Dimethylaminopropylmethacrylamid, Methylisobutylether oder Gemische der genannten Verbindungen. Weitere Beispiele für solche Monomere sind n-Butylacrylat, Hydroxyethylacrylat, Hydroxyethylmethacrylat, Hydroxypropyl-acrylat, Hydroxypropylmethacrylat, Hydroxybutylacrylat, Hydroxybutylmethacrylat, Maleinsäuremonomethylester, Maleinsäuredimethylester, Maleinsäuremonoethylester, Maleinsäuredimethylester, Acrylamid, Methacrylamid, N-Methylacrylamid, N,N-Dimethylacrylamid, Dimethylaminopropylmethacrylamid, N-Vinyl-2-methylimidazol, Vinylformiat, Vinylacetat, Vinylpropionat, Vinylmethylether, Vinylethylether, Vinyldodecylether, Vinylhexadecylether und Vinyloctadecylether sowie die Salze und Quaternierungsprodukte der Vinylimidazole und basischen (Meth)acrylate.

Die bei der Copolymerisation eingesetzten Monomermischungen enthalten die Monomeren (a) in einer Menge von 5 bis 95 Gew.-%, die Monomeren (b) in einer Menge von 95 bis 5 Gew.-% und die Monomeren (c) in einer Menge von 0 bis 30 Gew.-%. Vorzugsweise werden Copolymerisate aus 5 bis 95 Gew.-% Acrylsäure oder Methacrylsäure und 95 bis 5 Gew.-% N-Vinylpyrrolidon oder N-Vinylcaprolactam, jeweils bezogen auf das Gesamtgewicht der Monomeren, hergestellt. Die Polymerisation erfolgt erfindungsgemäß in wäßriger Lösung oder in wäßrig-alkoholischen Lösungen, die bis zu 75 Gew.-% eines C₁-C₄-Alkohols enthalten können. Falls wäßrige-alkoholische Lösungen als Polymerisationsmedium eingesetzt werden, verwendet man vorzugsweise als Alkohol Methanol oder Ethanol. Die Konzentration der Polymeren in der wäßrigen Reaktionsmischung beträgt üblicherweise 10 bis 70, vorzugsweise 15 bis 50 Gew.-%. Der pH-Wert der wäßrigen Lösung beträgt mindestens 6 und liegt vorzugsweise in dem Bereich von 7 bis 9, wobei zur Einstellung des pH-Wertes der wäßrigen Reaktionslösung eine Alkalimetall- oder Erdalkalimetallbase oder eine Mischung davon eingesetzt wird. Am einfachsten ist es hierbei, die Monomeren der Gruppe (a) als wäßrige Lösungen der Alkalimetall- oder Erdalkalimetallsalze mit einem pH-Wert von mindestens 6 einzusetzen. Man kann jedoch auch die Monomeren der Gruppe (a) in nicht neutralisierter Form dem Reaktionsgemisch zufügen und gleichzeitig eine mindestens äquivalente Menge einer Alkali- oder Erdalkalimetallbase zugeben, um den pH-Wert der Reaktionsmischung in dem gewünschten Bereich von 6 oder oberhalb 6 zu halten.

Die Polymerisation erfolgt üblicherweise bei Temperaturen von 40 bis 150, vorzugsweise bei 60 bis 100°C in Gegenwart von Radikale bildenden Initiatoren. Die Polymerisationsinitiatoren werden üblicherweise in Mengen von 0,01 bis 20, vorzugsweise 0,05 bis 10 Gew.-%, bezogen auf die Monomeren, eingesetzt.

Als radikalbildende Initiatoren sind alle diejenigen Verbindungen geeignet, die bei der jeweils gewählten Polymerisationstemperatur eine Halbwertszeit von weniger als 3 Stunden aufweisen. Falls man die Polymerisation zunächst bei niedriger Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen auch von wasserlöslichen und wasserunlöslichen Initiatoren einsetzen. Die in Wasser unlöslichen Initiatoren sind dann pur oder gelöst in einer organischen Phase, zudosierbar. Für die im folgenden angegebenen Temperaturbereiche soll man beispielsweise die dafür aufgeführten Initatoren verwenden:

Temperatur: 40 bis 60°C:
Acetylcyclohexansulfonylperoxid, Diacetylperoxidicarbonat, Dicyclohexylperoxidicarbonat, Di-2-ethylhexylperoxidicarbonat, tert.-Butylperneodecanoat, tert.-Amylperneodecanoat, 2,2'-Azobis-(4-methoxy-2,4-dimethylvaleronitril), 2,2'-Azobis-(2-methyl-N-phenylpropionamidin)dihydrochlorid, 2,2'-Azobis-(2-methylpropionamidin)dihydrochlorid, 2,2'-Azobis-(2-amidinopropan)dihydrochlorid.

Temperatur: 60 bis 80°C:
tert.-Butylperpivalat, tert.-Amylperpivalat, Dioctanoylperoxid, Dilauroylperoxid, 2,2'-Azobis-(2,4-dimethylvaleronitril).

Temperatur 80 bis 100°C:
Dibenzoylperoxid, tert.-Butylper-2-ethylhexanoat, tert.-Amylper-2-ethylhexanoat, tert.-Butylpermaleinat, 2,2'-Azobis-(iso-butyronitril), Dimethyl-2,2'-azobisisobutyrat, Natriumpersulfat, Kaliumpersulfat, Ammoniumpersulfat.

Temperatur 100 bis 120°C:
Bis-(tert.-butylperoxid)-cyclohexan, tert.-Butylperoxiisopropylcarbonat, tert.-Butylperacetat, Wasserstoffperoxid, tert.-Amylperoxy-3,5,5-trimethylhexanoat, tert.-Butylperoxy-3,5,5-trimethylhexanoat, Ethyl-3,3-di(tert.-amylperoxy)-butyrat.

Temperatur 120 bis 140°C:
2,2-Bis-(tert.-butylperoxy)-butan, Dicumylperoxid, Di-tert.-amylperoxid, Di-tert.-butylperoxid.

Temperatur: > 140°C:
p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanaidum-, Nickel- und Chromsalze oder organische Verbindungen, wie Benzoin, Dimethylanilin oder Ascorbinsäure, so können die Halbwertszeite der angegebenen radikalbildenden Initiatoren verringert werden. So kann man beispielsweise tert.-Butylhydroperoxid unter Zusatz von 5 ppm Kupfer-II-acetylacetonat derart aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.-% eines Polymerisationsinitiators oder einer Mischung mehrerer Polymerisationsinitiatoren. Als Redoxkomponenten setzt man 0,01 bis 15 Gew.-% der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Das Molekulargewicht der Polymeren kann, falls wünschenswert, durch Zugabe von Reglern in die Reaktionsmischung erniedrigt werden. Als Regler kommen beispielsweise niedere Alkohole wie Methanol, Ethanol, Propanol, n-Butanol, Isopropanol, Isobutanol oder Pentanol in Betracht. Als Regler für das Molekulargewicht können aber auch andere üblicherweise zu diesem Zweck eingesetzte Verbindungen, wie Schwefelverbindungen, beispielsweise 2-Mercaptoethanol, Butylmerkaptan, Dodecylmerkaptan, Thioessigsäure, Thiomilchsäure, Halogenverbindungen, wie Tetrachlorkohlenstoff oder 1,1,1-Tribrompropan, oder Ameisensäure und ihre Derivate eingesetzt werden. Durch geeignete Wahl von Regler, Initiator, Polymerisationstemperatur und Monomerenkonzentration wird der K-Wert des erhaltenen Polymerisats, der ein Maß für das Molekulargewicht ist, eingestellt. Die K-Werte der erhaltenen Copolymerisate betragen üblicherweise 10 bis 300, vorzugsweise 15 bis 200, wobei die Messungen an einer 1 gew.-%igen wäßrigen Lösung bei 25°C vorgenommen werden.

Die Herstellung der Copolymeren erfolgt üblicherweise in Rührkesseln mit Anker-, Blatt-, Impeller- oder Mehrstufenimpulsgegenstromrührer. Soll bei hohen Konzentrationen gearbeitet oder Polymerisate mit hohem K-Wert synthetisiert werden, ist es zweckmäßig, in Knetern oder ähnlichen Apparaten zu arbeiten. Bei der Herstellung kann der genannte Ansatz im Reaktor vorgelegt werden und nach Erhitzen auf die gewünschte Temperatur durch Zugabe des Initiators die Reaktion gestartet werden. Bei dieser Fahrweise ist jedoch die Abführung der Polymerisationswärme problematisch. Zweckmäßigerweise legt man daher das Lösemittel im Reaktor vor und dosiert bei der gewählten Polymerisationstemperatur die Monomeren zu oder als wäßrige Monomer-Lösung sowie den Initiator oder als Lösung in Wasser oder Alkohol absatzweise oder kontinuierlich zu. Oft ist auch für den Reaktionsablauf vorteilhaft, das Lösemittel im Reaktor vorzulegen und die Monomeren, den Initiator und das Neutralisationsmittel zur Aufrechterhaltung des erforderlichen pH-Wertes unter den Polymerisationsbedingungen zuzudosieren.

Die erhaltenen Copolymere können vielfältig verwendet werden, beispielsweise als Schmiermitteladditive, Strukturverbesserer von Ackerböden, Haarlack bzw. Haarsprayadditiv, Rostentferner von metallischen Oberflächen, Rostverhinderer, Mittel zur Erdölwiedergewinnung aus ölhaltigem Wasser, Kesselsteinverhinderer bzw. Kesselsteinentferner, Wirkstofffreisetzer, Klebstoffrohstoff, Waschmitteladditiv, Reinigungsmittel von Abwässern, Hilfsmittel in der Photoindustrie, in Immunochemikalien und in kosmetischen Materialien.

Die folgenden Beispiele erläutern die Erfindung. Der K-Wert wird an einer 1 gew.-%igen Lösung in Wasser bei 25°C nach Fikentscher gemessen (vgl. H. Fikentscher, Cellulose-Chemie, Band 13, S. 58-64 und 71-74, 1932; Encyclopedia of Chemical Technology, John Wiley and Sons, 1970, Vol. 21, 2nd Ed., Seiten 427-428).

### Beispiel 1

Eine Mischung aus 180 g Acrylsäure und 600 g Wasser wird mit 205 g 50 gew.-%iger wäßriger Natronlauge auf einen pH-Wert von 7,7 eingestellt und mit 20 g N-Vinylpyrrolidon aufgefüllt (Zulauf 1). Aus 4,2 g 2,2'-Azobis-(2-methylpropionamidin)dihydrochlorid und 96 g Wasser wird Zulauf 2 hergestellt.

In einem 2-l-Rührbehälter, der mit Rührer, Heizung, Rückflußkühler, Dosiervorrichtung, Gasein- und -auslaß ausgestattet ist, werden 100 ml Wasser, 250 ml Zulauf 1 und 5 ml Zulauf 2 vorgelegt und unter Rühren auf 60°C erhitzt. Bei dieser Temperatur werden der restliche Zulauf 1 in 3 Stunden und der restliche Zulauf 2 in 3,5 Stunden zudosiert. Anschließend wird noch 3 Stunden lang bei dieser Temperatur gerührt. Man erhält eine klare, viskose Polymerlösung mit einem Feststoffgehalt von 22,5 Gew.-% und einer Hydrierjodzahl von 1,0. Der K-Wert des Copolymeren beträgt 65,0.

### Beispiel 2

Eine Mischung aus 180 g Methacrylsäure und 600 g Wasser wird mit 193 g 50 gew.-%iger Natronlauge auf einen pH-Wert von 7,6 eingestellt und mit 20 g N-Vinylpyrrolidon aufgefüllt (Zulauf 1). Aus 4,2 g 2,2'-Azobis-(2-methylpropionamidin)dihydrochlorid und 96 g Wasser wird Zulauf 2 hergestellt.

In einem 2-l-Rührbehälter, der wie in Beispiel 1 ausgerüstet ist, werden 100 ml Wasser, 250 ml Zulauf 1 und 5 ml Zulauf 2 vorgelegt und unter Rühren auf 60°C erhitzt. Bei dieser Temperatur werden der restliche Zulauf 1 innerhalb von 3 Stunden und der restliche Zulauf 2 in 3,5 Stunden zudosiert. Anschließend wird noch 3 Stunden lang bei dieser Temperatur gerührt. Man erhält eine klare, viskose Polymerlösung mit einem Feststoffgehalt von 23,3 Gew.-% und einer Hydrierjodzahl von 1,3. Der K-Wert des Copolymers beträgt 57,9.

### Beispiel 3

Eine Mischung aus 180 g Maleinsäure und 540 g Wasser wird mit 260 g 50 gew.-%iger Natronlauge auf einen pH-Wert von 8,0 eingestellt und mit 20 g N-Vinylpyrrolidon aufgefüllt (Zulauf 1). Aus 4,2 g 2,2'-Azobis-(2-methylpropionamidin)dihydrochlorid und 96 g Wasser wird Zulauf 2 hergestellt.

In einem 2-l-Rührbehälter, der wie in Beispiel 1 ausgerüstet ist, werden 100 ml Wasser, 250 ml Zulauf 1 und 5 ml Zulauf 2 vorgelegt und unter Rühren auf 65°C erhitzt. Bei dieser Temperatur werden der restliche Zulauf 1 innerhalb von 3 Stunden und der restliche Zulauf 2 in 3,5 Stunden zudosiert. Anschließend wird noch 3 Stunden lang bei dieser Temperatur gerührt. Man erhält eine trübe, leicht viskose Polymerlösung mit einem Feststoffgehalt von 25,8 Gew.-% und einer Hydrierjodzahl von 3,3. Der K-Wert des Copolymers beträgt 17,8.

### Beispiel 4

Eine Mischung aus 125 g Acrylsäure, 55 g Maleinsäure und 540 g Wasser wird mit 225 g 50 gew.-%iger Natronlauge auf einen pH-Wert von 7,7 eingestellt und mit 20 g N-Vinylpyrrolidon aufgefüllt (Zulauf 1). Aus 4,2 g 2,2'-Azobis-(2-methylpropionamidin)-dihydrochlorid und 96 g Wasser wird Zulauf 2 hergestellt.

In einem 2-l-Rührbehälter, der wie in Beispiel 1 ausgerüstet ist, werden 100 ml Wasser, 250 ml Zulauf 1 und 5 ml Zulauf 2 vorgelegt und unter Rühren auf 65°C erhitzt. Bei dieser Temperatur werden der restliche Zulauf 1 innerhalb von 3 Stunden und der restliche Zulauf 2 in 3,5 Stunden zudosiert. Anschließend wird noch 2 Stunden lang bei 70°C gerührt. Man erhält eine klare, viskose Polymerlösung mit einem Feststoffgehalt von 24,6 Gew.-% und einer Hydrierjodzahl von 0,7. Der K-Wert des Copolymers beträgt 36,4.

### Beispiel 5

Eine Mischung aus 180 g Acrylsäure und 600 g Wasser wird mit 201 g 50 gew.-%iger wäßriger Natronlauge auf einen pH-Wert von 7,7 eingestellt und mit 20 g N-Vinylpyrrolidon aufgefüllt (Zulauf 1). Aus 14 g 30 gew.-%iger wäßriger Wasserstoffperoxid-Lösung und 86 g Wasser wird Zulauf 2 hergestellt.

In einem 2-l-Rührbehälter, der wie in Beispiel 1 ausgerüstet ist, werden 100 ml Wasser, 250 ml Zulauf 1 und 5 ml Zulauf 2 vorgelegt und unter Rühren bis zum Rückfluß erhitzt. Bei der erreichten Temperatur werden der restliche Zulauf 1 und Zulauf 2 in 3 Stunden gleichzeitig zudosiert. Anschließend wird noch 2 Stunden lang bei 100°C gerührt. Man erhält eine gelbliche, klare viskose Polymerlösung mit einem Feststoffgehalt von 22,3 Gew.-%. Der K-Wert des Copolymers beträgt 41,5.

### Beispiel 6

Eine Mischung aus 160 g Acrylsäure und 600 g Wasser wird mit 178,5 g 50 gew.-%iger wäßriger Natronlauge auf einen pH-Wert von 7,8 eingestellt und mit 40 g N-Vinylpyrrolidon aufgefüllt (Zulauf 1). Aus 14 g 30 gew.-%iger wäßriger Wasserstoffperoxid-Lösung und 86 g Wasser wird Zulauf 2 hergestellt.

In einem 2-l-Rührbehälter, der wie in Beispiel 2 ausgerüstet ist, werden 100 ml Wasser, 250 ml Zulauf 1 und 5 ml Zulauf 2 vorgelegt und unter Rühren bis zum Rückfluß erhitzt. Bei der erreichten Temperatur werden der restliche Zulauf 1 und Zulauf 2 in 3 Stunden gleichzeitig zudosiert. Anschließend wird noch 2 Stunden lang bei 100°C gerührt. Man erhält eine gelblich, klare viskose Polymerlösung mit einem Feststoffgehalt von 21,8 Gew.-%. Der K-Wert des Copolymers beträgt 47,0.

### Beispiel 7

Eine Mischung aus 100 g Acrylsäure und 600 g Wasser wird mit 110,5 g 50 gew.-%iger wäßriger Natronlauge auf einen pH-Wert von 7,9 eingestellt und mit 100 g N-Vinylpyrrolidon aufgefüllt (Zulauf 1). Aus 14 g 30 gew.-%iger wäßriger Wasserstoffperoxid-Lösung und 86 g Wasser wird Zulauf 2 hergestellt.

In einem 2-l-Rührbehälter, der wie in Beispiel 1 ausgerüstet ist, werden 100 ml Wasser, 250 ml Zulauf 1 und 5 ml Zulauf 2 vorgelegt und unter Rühren bis zum Rückfluß erhitzt. Bei der erreichten Temperatur werden der restliche Zulauf 1 und Zulauf 2 in 3 Stunden gleichzeitig zudosiert. Anschließend wird noch 2 Stunden lang bei 100°C gerührt. Man erhält eine gelblich, klare viskose Polymerlösung mit einem Feststoffgehalt von 21,1 Gew.-%. Der K-Wert des Copolymers beträgt 58,8.

### Beispiel 8

Eine Mischung aus 10 g Acrylsäure und 600 g Wasser wird mit 12,5 g 50 gew.-%iger wäßriger Natronlauge auf einen pH-Wert von 7,8 eingestellt und mit 190 g N-Vinylpyrrolidon aufgefüllt (Zulauf 1). Aus 14 g 30 gew.-%iger wäßriger Wasserstoffperoxid-Lösung und 86 g Wasser wird Zulauf 2 hergestellt.

In einem 2-l-Rührbehälter, der wie in Beispiel 2 ausgerüstet ist, werden 100 ml Wasser, 250 ml Zulauf 1 und 5 ml Zulauf 2 vorgelegt und unter Rühren bis zum Rückfluß erhitzt. Bei der erreichten Temperatur werden der restliche Zulauf 1 und Zulauf 2 in 3 Stunden gleichzeitig zudosiert. Anschließend wird noch 2 Stunden lang bei 100°C gerührt. Man erhält eine klare, viskose Polymerlösung mit einem Feststoffgehalt von 23,1 Gew.-%. Der K-Wert des Copolymers beträgt 73,4.

### Beispiel 9

Eine Mischung aus 85 g Acrylsäure und 30 g Ethylacrylat und 600 g Wasser wird mit 93,5 g 50 gew.-%iger wäßriger Natronlauge auf einen pH-Wert von 8,0 eingestellt und mit 85 g N-Vinylpyrrolidon aufgefüllt (Zulauf 1). Aus 4,8 g tert.-Amylper-2-ethylhexanoat und 45 ml Ethanol wird Zulauf 2 hergestellt.

In einem 2-l-Rührbehälter, der wie in Beispiel 1 ausgerüstet ist, werden 100 ml Wasser, 250 ml Zulauf 1 und 3 ml Zulauf 2 vorgelegt und unter Rühren auf 90°C erhitzt. Bei dieser Temperatur werden der restliche Zulauf 1 in 5 Stunden und der restliche Zulauf 2 in 6 Stunden zudosiert. Anschließend wird noch 1,5 Stunden lang bei 90°C gerührt. Man erhält eine leicht trübe, viskose Polymerlösung mit einem Feststoffgehalt von 24,4 Gew.-%. Der K-Wert des Copolymers beträgt 52,1.

### Beispiel 10

Eine Mischung aus 60 g Acrylsäure und 60 g Dimethylaminopropylmethacrylamid und 600 g Wasser wird mit 68 g 50 gew.-%iger wäßriger Natronlauge auf einen pH-Wert von 7,4 eingestellt und mit 80 g N-Vinylpyrrolidon aufgefüllt (Zulauf 1). Aus 3,5 g tert.-Amylperpivalat und 46 ml Ethanol wird Zulauf 2 hergestellt.

In einem 2-l-Rührbehälter, der wie in Beispiel 1 ausgerüstet ist, werden 100 ml Wasser, 250 ml Zulauf 1 und 3 ml Zulauf 2 vorgelegt und unter Rühren auf 70°C erhitzt. Bei dieser Temperatur werden der restliche Zulauf 1 in 4 Stunden und der restliche Zulauf 2 in 6 Stunden zudosiert. Anschließend wird noch 1 Stunde lang bei dieser Temperatur gerührt. Man erhält eine klare, viskose Polymerlösung mit einem Feststoffgehalt von 25,1 Gew.-%. Der K-Wert des Copolymers beträgt 60,3.

### Beispiel 11

Eine Mischung aus 100 g Acrylsäure, 60 g Vinylisobutylether und 600 g Wasser wird mit 160 g 47 gew.-%iger wäßriger Kalilauge auf einen pH-Wert von 6,9 eingestellt und mit 40 g N-Vinylpyrrolidon aufgefüllt (Zulauf 1). Aus 4,2 g 2,2'-Azobis-(2-methylpropionamidin)dihydrochlorid und 96 g Wasser wird Zulauf 2 hergestellt.

In einem 2-l-Rührbehälter, der wie in Beispiel 1 ausgerüstet ist, werden 100 ml Wasser, 250 ml Zulauf 1 und 3 ml Zulauf 2 vorgelegt und unter Rühren auf 55°C erhitzt. Bei dieser Temperatur werden der restliche Zulauf 1 in 5 Stunden und der restliche Zulauf 2 in 7 Stunden zudosiert. Anschließend wird noch 1 Stunde lang bei dieser Temperatur gerührt. Man erhält eie fast klare, viskose Polymerlösung mit einem Feststoffgehalt von 26,0 Gew.-%. Der K-Wert des Copolymers beträgt 50,1.

### Beispiel 12

Eine Mischung aus 303,1 g Acrylsäure und 600 g Wasser wird mit 331 g 50 gew.-%iger, wäßriger Natronlauge auf einen pH-Wert von 8,0 eingestellt (Zulauf 1). 32,6 g N-Vinylpyrrolidon bilden Zulauf 2. Aus 49,1 g Natriumbisulfit und 73,6 g Wasser wird Zulauf 3 hergestellt. Zulauf 4 besteht aus 9,9 g Natriumpersulfat und 40 g Wasser.

In einem 2-l-Rührbehälter, der wie in Beispiel 1 ausgerüstet ist, werden bei 95°C der Zulauf 1, 2 und 3 jeweils gleichzeitig in 6 Stunden und Zulauf 4 in 6,25 Stunden zudosiert. Nach Ende des Zulaufs 3 wird auf 80°C abgekühlt. Bei dieser Temperatur werden noch innerhalb von 0,5 Stunden 0,32 g 2,2'-Azobis-(2-methylpropionamidin)dihydrochlorid, gelöst in 10 ml Wasser, zudosiert und 1 Stunde nachgerührt. Man erhält eine farblose, fast klare viskose Polymerlösung mit einem Feststoffgehalt von 32,8 Gew.-%. Der K-Wert des Copolymers beträgt 56,0.

### Beispiel 13

Eine Mischung aus 389 g 48 gew.-%iger wäßriger Lösung von Methacrylsäurenatriumsalz, 192 g N-Vinylpyrrolidon, 240,6 g N-Vinylcaprolactam, 845,8 g 45 gew.-%iger wäßriger Lösung von 3-Methyl-l-vinylimidazolinmethosulfat (hergestellt aus N-Vinylimidazol und Dimethylsulfat), 2,2 g 2,2'-Azobis-(2-methylpropionamidin)dihydrochlorid und 500 g Wasser wird in einem 4-l-Rührbehälter vorgelegt, der wie in Beispiel 1 ausgerüstet ist. Der pH-Wert der Mischung beträgt 7,8.

6,5 g 2,2'-Azobis-(2-methylpropionamidin)dihydrochlorid und 100 g Wasser bilden Zulauf 1. Aus 8,7 g 2,2'-Azobis-(2-methylpropionamidin)dihydrochlorid und 100 g Wasser wird Zulauf 2 hergestellt.

Die Vorlage wird unter Rühren auf 75°C erhitzt und Zulauf 1 innerhalb von 4 Stunden zudosiert. Nach Ende des Zulaufs 1 wird der gesamte Zulauf 2 auf einmal zugegeben, und der Ansatz (2 Stunden) bei 80°C nachpolymerisiert. Anschließend wird mit 7 gew.-%iger wäßriger Wasserstoffsuperoxid-Lösung weitere 2 Stunden bei dieser Temperatur nachgerührt und die Endkonzentration mit 250 g Wasser eingestellt. Man erhält eine fast klare, viskose Polymerlösung mit einem Feststoffgehalt von 38,6 gew.-%. Der K-Wert des Polymeren beträgt 49.

### Beispiel 14

Eine Mischung aus 481,5 g 48 gew.-%iger wäßriger Lösung von Methacrylsäurenatriumsalz, 1046,9 g einer 45 gew.-%igen wäßrigen Lösung von 3-Methyl-l-vinylimidazoliummethosulfat (hergestellt aus N-Vinylimidazol und Dimethylsulfat), 297,7 g N-Vinylcaprolactam und 2,2 g 2,2'-Azobis-(2-methylpropionamidin)dihydrochlorid wird in einem 4-l-Rührbehälter vorgelegt, der wie in Beispiel 1 ausgerüstet ist. Der pH-Wert der Mischung beträgt 7,5.

6,5 g 2,2'-Azobis-(2-methylpropionamidin)dihydrochlorid und 100 g Wasser bilden Zulauf 1. Aus 8,7 g 2,2'-Azobis-(2-methylpropionamidin)dihydrochlorid und 100 g Wasser wird Zulauf 2 hergestellt.

Die Vorlage wird unter Rühren auf 75°C erhitzt und Zulauf 1 innerhalb von 4 Stunden zudosiert. Nach Ende des Zulaufs 1 wird der gesamte Zulauf 2 auf einmal zugegeben, und der Ansatz (2 Stunden) bei 80°C nachpolymerisiert. Anschließend wird mit 7 gew.-%iger, wäßriger Wasserstoffsuperoxid-Lösung weitere 2 Stunden bei dieser Temperatur nachgerührt und die Endkonzentration mit 250 g Wasser eingestellt. Man erhält eine fast klare, viskose Polymerlösung mit einem Feststoffgehalt von 44,4 Gew.-%. Der K-Wert des Polymeren beträgt 42.

## Patentansprüche

1. Verfahren zur Herstellung von Copolymerisaten aus
(a) Säuregruppen enthaltenden monoethylenisch ungesättigten Monomeren,
(b) N-Vinyllactamen und gegebenenfalls
(c) anderen monoethylenisch ungesättigten Monomeren
durch Copolymerisieren der Monomeren in Gegenwart von Radikale bildenden Polymerisationsinitiatoren, dadurch gekennzeichnet, daß die Copolymerisation nach Art einer Lösungspolymerisation in Wasser bei einem pH-Wert von mindestens 6 durchgeführt und daß zur Einstellung des pH-Wertes der wäßrigen Reaktionslösung eine Alkalimetall- oder Erdalkalimetallbase oder eine Mischung davon eingesetzt wird, wobei die radikalbildenden Initiatoren bei der gewählten Reaktionstemperatur eine Halbwertszeit von weniger als 3 Stunden aufweisen.

2. Verfahren nach Anspruch 1, dadurch gekennzeichnet, daß die Menge der bei der Copolymerisation eingesetzten Monomeren
(a) 5 bis 95 Gew.-%,
(b) 95 bis 5 Gew.-% und
(c) 0 bis 30 Gew.-%,
beträgt.

3. Verfahren nach Anspruch 1 oder 2, dadurch gekennzeichnet, daß als Monomere der Gruppe (a) Acrylsäure, Methacrylsäure, Maleinsäure, Fumarsäure, 2-Acrylamido-2-methylpropansulfonsäure, Vinylsulfonsäure oder deren Gemische eingesetzt werden.

4. Verfahren nach einem der Ansprüche 1 bis 3, dadurch gekennzeichnet, daß als Monomere der Gruppe (b) N-Vinylpyrrolidon, N-Vinylcaprolactam oder deren Gemische eingesetzt werden.

5. Verfahren nach Anspruch 1 oder 2, dadurch gekennzeichnet, daß als Monomere der Gruppe (c) Methylacrylat, Methylmethacrylat, Ethylacrylat, Maleinsäurediethylester, N-Vinylimidazol, Dimethylaminoethylacrylat, Dimethylaminoethylmethacrylat, Dimethylaminopropylmethacrylamid, Vinylisobutylether oder deren Gemische eingesetzt werden.

6. Verfahren nach einem der Ansprüche 1 bis 5, dadurch gekennzeichnet, daß zur Einstellung des pH-Werts der wäßrigen Monomerlösung Natriumhydroxid, Kaliumhydroxid, deren Carbonate oder Hydrogencarbonate eingesetzt werden.

7. Verwendung nach einem der Ansprüche 1 bis 6 hergestellten Polymerisate als Haarlack bzw. Haarsprayadditiv, Schmiermitteladditiv, Strukturverbesserer von Ackerböden, Rostverhinderer bzw. Rostentferner von metallischen Oberflächen, Kesselsteinverhinderer bzw. Kesselsteinentferner, Mittel zur Erdölwiedergewinnung aus Wasser, Wirkstofffreisetzer, Reinigungsmittel von Abwässern, Klebstoffrohstoff, Waschmitteladditiv, Hilfsmittel in der Photoindustrie und in kosmetischen Materialien.

## Claims

1. A process for the preparation of a copolymer of
(a) monoethylenically unsaturated monomers containing acid groups,
(b) N-vinyllactams and, if required,
(c) other monoethylenically unsaturated monomers
by copolymerization of monomers in the presence of free radical polymerization initiators, wherein the copolymerization is carried out by a solution polymerization method in water at a pH of at least 6, and an alkali metal base or alkaline earth metal base or a mixture thereof is used for establishing the pH of the aqueous reaction solution, the free radical initiators having a half life of less than 3 hours at the selected reaction temperature.

2. A process as claimed in claim 1, wherein the amounts of the monomers used in the copolymerization are
from 5 to 95% by weight of (a),
from 95 to 5% by weight of (b) and
from 0 to 30% by weight of (c).

3. A process as claimed in claim 1 or 2, wherein acrylic acid, methacrylic acid, maleic acid, fumaric acid, 2-acrylamido-2-methylpropanesulfonic acid, vinylsulfonic acid or a mixture thereof is used as monomers of group (a).

4. A process as claimed in any of claims 1 to 3, wherein N-vinylpyrrolidone, N-vinylcaprolactam or a mixture thereof is used as monomers of group (b).

5. A process as claimed in claim 1 or 2, wherein methyl acrylate, methyl methacrylate, ethyl acrylate, diethyl maleate, N-vinylimidazole, dimethylaminoethyl acrylate, dimethylaminoethyl methacrylate, dimethylaminopropylmethacrylamide, vinyl isobutyl ether or a mixture thereof is used as monomers of group (c).

6. A process as claimed in any of claims 1 to 5, wherein sodium hydroxide, potassium hydroxide or the carbonates or bicarbonates thereof are used for establishing the pH of the aqueous monomer solution.

7. Use of a polymer prepared as claimed in any of claims 1 to 6 as hair lacquers and hair spray additives, lubricant additives, structure improvers for arable soils, rust inhibitors and rust removers for metallic surfaces, boiler scale inhibitors and boiler scale removers, agents for recovering mineral oil from water, agents for releasing active ingredients, cleaning agents for wastewaters, adhesive raw materials, detergent additives and assistants in the photographic industry and in cosmetic materials.

## Revendications

1. Procédé de fabrication de copolymères constitués
(a) de monomères monoéthyléniquement insaturés, contenant des radicaux acide,
(b) de N-vinyllactames et, éventuellement,
(c) d'autres monomères monoéthyléniquement insaturés,
par la copolymérisation des monomères en présence d'amorceurs de polymérisation engendrant des radicaux, caractérisé en ce que l'on entreprend la copolymérisation selon la nature d'une polymérisation en solution dans de l'eau et à une valeur du pH d'au moins 6 et en ce que, en vue du réglage de la valeur du pH de la solution réactionnelle aqueuse, on utilise une base à métal alcalin ou à métal alcalino-terreux, ou un mélange de celles-ci, où les amorceurs qui engendrent des radicaux présentent une durée de demi-vie utile inférieure à 3 heures à la température réactionnelle choisie.

2. Procédé suivant la revendication 1, caractérisé en ce que les proportions des monomères utilisés au cours de la polymérisation sont les suivantes :
(a) 5 à 95 % en poids,
(b) 95 à 5 % en poids et
(c) 0 à 30 % en poids.

3. Procédé suivant la revendication 1 ou 2, caractérisé en ce que l'on utilise, à titre de monomères du groupe (a), l'acide acrylique, l'acide méthacrylique, l'acide maléique, l'acide fumarique, l'acide 2-acrylamido-2-méthylpropanesulfonique, l'acide vinylsulfonique, ou leurs mélanges.

4. Procédé suivant l'une quelconque des revendications 1 à 3, caractérisé en ce que l'on utilise, à titre de monomères du groupe (b), la N-vinylpyrrolidone, le N-vinylcaprolactame, ou leurs mélanges.

5. Procédé suivant la revendication 1 ou 2, caractérisé en ce que l'on utilise, à titre de monomères du groupe (c), l'acrylate de méthyle, le méthacrylate de méthyle, l'acrylate d'éthyle, le maléate de diéthyle, le N-vinylimidazole, l'acrylate de diméthylaminoéthyle, le méthacrylate de diméthylaminoéthyle, le diméthylaminopropylméthacrylamide, l'éther vinylisobutylique, ou leurs mélanges.

6. Procédé suivant l'une quelconque des revendications 1 à 5, caractérisé en ce qu'en vue du réglage de la valeur du pH de la solution aqueuse des monomères, on utilise l'hydroxyde de sodium, l'hydroxyde de potassium, leurs carbonates ou hydrogénocarbonates.

7. Utilisation des polymères fabriqués selon l'une quelconque des revendications 1 à 6 à titre de laque capillaire ou d'additif pour sprays capillaires, d'additif pour lubrifiants, d'agent d'amendement de la structure de terres labourables, d'agent antirouille ou d'agent d'élimination de la rouille de surfaces métalliques, d'agent d'inhibition du dépôt de tartre ou d'agent d'élimination du tartre, d'agent de récupération de pétrole à partir d'eau, d'agent de libération d'un principe actif, d'agent d'épuration d'eaux résiduaires, de matière première pour colle, d'additif pour détergents, d'adjuvant dans la photo-industrie et dans des matières cosmétiques.
